# EUROPEAN PATENT APPLICATION

(11) **EP 1 990 734 A1**
(43) Date of publication of application: **12.11.2008**
(21) Application number: 08006930.5
(22) Date of filing: 07.04.2008
(51) Int. Cl.: G06F 15/02, G06F 21/00, G07C 9/00

(54) **Portable and independent system for storage and display of passwords and pins**

(30) Priority: 09.05.2007 IT RM20070260
(71) Applicant: Menstecnica S.R.L., 85038 Senise (PZ) (IT)
(72) Inventor: Bellusci, Domenica, 85038 Senise (PZ) (IT); Cantisani, Carmen, 00146 Roma (RM) (IT); Fachechi, Luca, 73017 Sannicola (LE) (IT)

(57) **Abstract**

Apparatus and method for a portable and autonomous system fitted to store and display passwords, PINs and other sensitive information. The system does not require the use of a personal computer, even if it can be optionally attached to it. The system is composed of a microcontroller, a non - volatile memory, a display, a biometric authentication system and an integrated device for the elaboration of biometric data.

The biometric sensor acts also by pointing device and allows the insertion and the management of data through a virtual keyboard visualized on the display.

The system, with feeding on battery and with the size of a keychain, can be brought with himself and used in case of need to see the passwords and PIN codes needed to access websites, to make operations cash dispenser or otherwise.

The data, passwords, PINs, etc. are stored in non-volatile memory in ciphered form. The system of encryption extracts the key using the data provided by the biometric sensor.

The non-volatile memory ensures the protection of data also with a flat battery.

The encryption of data guarantees the secrecy of the same if the device is lost or stolen. Compared with previous systems the object of this invention has the advantage of being autonomous, failing need to be connected to personal computers.

## Description

### FIELD OF TECNIQUE ( to which the invention refers).

The field of technique of the invention is the electronics.

### INVENTION (Brief description of the invention).

Apparatus and method for a portable and autonomous system fitted to store and display passwords, PINs (Personal Identification Number) and other sensitive information. The system does not require the use of a personal computer, even if it can be optionally attached to it. The system is composed of a microcontroller, a non - volatile memory, a display, a biometric authentication system and an integrated device for the elaboration of biometric data.

The biometric sensor acts also by pointing device and allows the insertion and the management of data through a virtual keyboard visualized on the display.

The system, with feeding on battery and with the size of a keychain, can be brought with himself and used in case of need to see the passwords and PIN codes needed to access websites, to make operations cash dispenser or otherwise.

The data, passwords, PINs, etc. are stored in non-volatile memory in ciphered form. The system of encryption extracts the key using the data provided by the biometric sensor.

The non-volatile memory ensures the protection of data also with a flat battery.

The encryption of data guarantees the secrecy of the same if the device is lost or stolen. Compared with previous systems the object of this invention has the advantage of being autonomous, failing need to be connected to personal computers.

### STATE OF KNOWLEDGE: (Outline to what is already known or present on the market).

Systems of storage of the passwords with authentication by biometric sensor are already present on the market. They still have two disadvantaged: or are integrated into systems more complex, cumbersome or expensive as notebook or handhelds, or require to be connected to personal computers, for example through USB (Universal Serial Bus) ports.

In the first case, their use requires the purchase of the integrated system and the knowledge, from the user, of the host operating system. In the second case these systems aren't autonomous and therefore don't allow to access to information in they contained in any place and at any time.

To go towards these requirements, the device object of this invention is a portable and autonomous device that presents a user interface simple and immediate and that really requires a minimal effort of learning.

### PROBLEM:(Description of the problem that is solved with the new invention).

The problem that it intends to solve with this invention is that of the safely and independently storage of sensitive data.

The memorization of codes and passwords is an theme that becomes increasingly important. The current information tools, while on the one hand permit to simplify many aspects of the work and of the life in generally, on the other hand often put to the difficult test the mnemonic capacity of user through the demand for access codes.

In particular, thinking of the numerous activities that each of us make using a card and the relative code (credit cards, ATM - Automatic Teller Machines - card, cards for purchases, codes for unblock equipment such as mobile phones, etc..) or a password (for the computers in the office, for that at the home, for the links and for the transactions on the Internet as the e-mail, the operation banking, the fiscal and tributary transactions, etc..).

For reasons of security it is almost always required that these passwords are at least a certain length, containing at the same numbers and lowercase and uppercase characters or special symbols, in other words that are not easily stored. Also for some of these systems, such as the computer of the office, it is required to periodically change the password.

The spread of these systems, closely linked to the spread of the information and telematics system in all areas of the professional and personal life, is only the beginning. Therefore will become increasingly pressing two needs strongly linked to the spread of these identification systems: 1) the possibility to consult, whenever it is serve, quickly and easily a code or a password; 2) the necessity that such information are protected and that their reading are done in complete safety for the owner.

Each of us has developed a system for transcribing, ciphered or store the codes, with the frequent risk of forgetting where they were annotated, of losing tickets and agendas with these information or becoming unable to decipher the strange notes written. The same method of authentication through the password of protection, it is not uniquely associated to the user, in the sense that if a person, different from the owner, comes into possession of the password, he can enter into the data in the same way of the owner.

### SOLUTIONS OF THE TECHNICAL PROBLEM: (Illustration of the optimal solution that is designed to give to the problem described in the preceding paragraph).

The system in object allows the user, and only he, to store and display in way completely secure a series of codes, passwords and other identifiers.

The owner of the device has to store hiss biometric data (in particular his fingerprints), once before including the codes and passwords.

From that moment on, both the memory and the display will activate themselves only to the recognition of fingerprint of the owner, ensuring the protection of stored data.

As form of personal authentication, and uniquely associated to the owner, this invention preferably using a biometric system for the recognition of fingerprints.

The market of the chips for the survey of the fingerprints is varied and today offers a wide range of sensors, relatively shape, size and technology of survey (optical, thermic, capacitive, RF, etc..).

To a limited extent to this invention we can classify these chips into two classes: the first class consists of the chip type Area / Flatbed, and the other consists of the chip type Line / swipe. The chip of the first class are generally larger and with form rectangular. They are constitute by an matrix of sensors and the image is acquired all in one go just putting the finger on the surface of the chip.

The chip of the second class are generally smaller and with form elongated. They consist of a few lines of sensors and the image of the impression is acquired by sliding the finger on the surface of the chip.

One additional characteristic of some of these chips, which for this invention is a particularly important role, is the implementation of a function of survey of the movements of finger on the sensor (without being read the fingerprint). In this way the sensor can be used as a pointing device, as if it were a small touch-pad.

In fact, the present invention uses preferably a chip of type line / swipe with survey of motion of finger on the sensor. This allows to implement and to manage a system of navigation based on menu and on virtual keyboard, designed on the display, and to avoid the use of keys of navigation.

The recognition of impression is a complex task and highly demanding in terms of computing power and, until very recently, required the presence of a computer to which the chip would be connected. Recently some manufacturers of chips have developed some integrated devices, particularly the DSP (Digital Signal Processor) that, through optimized algorithms, supplied together with the DSP, can to carry out operations of storage, acquisition and recognition of fingerprints in autonomous way.

The DSP united to the chips for the survey of the fingerprints allow storage in situ of a small number of fingerprints, and are therefore suitable for applications of unique recognition (that is the mark of the person who is trying to authenticate is compared with the stored imprint previously by the same person).

These DSP provide the result of the comparison with a margin of error very low and in a very short time, in the order of fractions of a second.

The result of the comparison, which consists of a series of 100-200 bytes, is the starting basis for the generation of the key of the encryption used by the system for storage of confidential data. Essential characteristic of these DSP is the low consumption of energy, which makes them suitable for portable applications with battery feeding.

### FUNCTIONING AND DESCRIPTION OF DRAWINGS: (Description of the working of the invention and relative drawings).

The drawings attached to this description illustrate the principle of operation of the invention and its possible implementation, in particular:
- the Drawing 1 shows the block diagram of the device;
- the Drawing 2 shows the flowchart of the phase of initialization of the device;
- the Drawing 3 shows the flowchart of the phase of normal use of the device;
- the Drawing 4 shows a possible implementation of the device;
- the Drawing 5 shows the exploded of the possible configuration of the device.

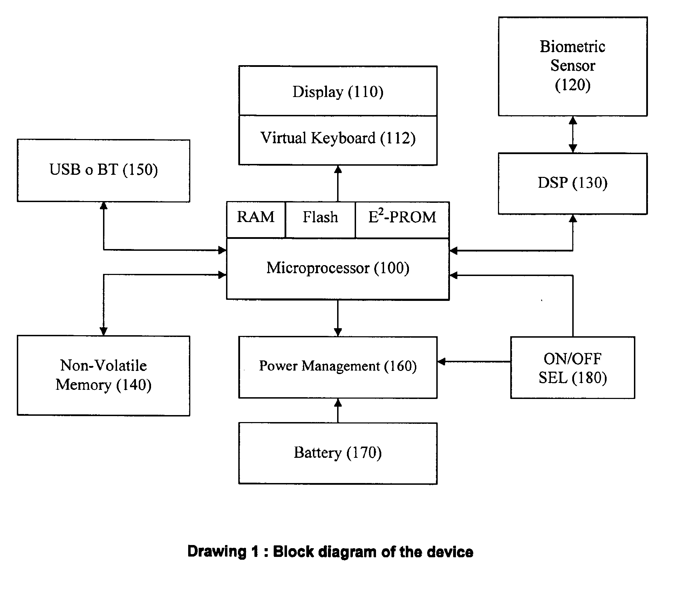

The system (Drawing 1) is constituted essentially by the following functional blocks: a microcontroller, a system of visualization and navigation, a system of biometric identification, a memory, a system of management of the feeding, a interface of communication with the outside.

The microcontroller (100) monitors and manages the functioning of the other blocks. It includes, internally or externally, a RAM - Random Access Memory - , a flash memory and a memory E2-PROM. The firmware is stored in the internal flash memory. Once that the firmware is written in the flash memory, the access in reading from the outside of the microcontroller is disabled. The subsystem composed by the biometric sensor (120) and by the DSP (Digital Signal Processor) (130) constitutes the authentication system. The DSP, connected directly to the biometric sensor, is responsible for the real-time processing of biometric data and provides the interface between the microcontroller and the biometric sensor.

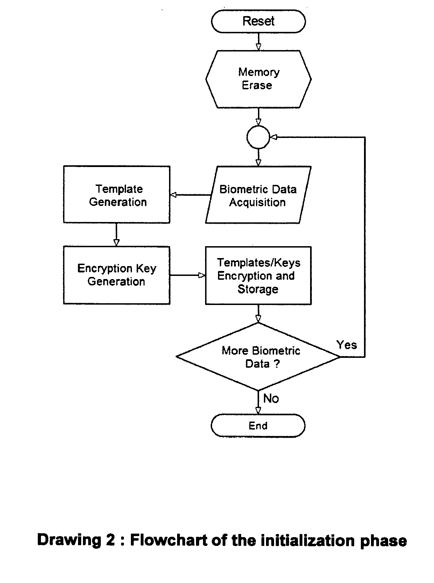

Before it can use, the device must be initialized. The initialization (Drawing 2) consists in to store inside the device a series of digital signatures associated to biometric data, preferably a series of fingerprint of the owner. The phase of initialization is activated at the first starting of the device, or after a hardware reset of itself.

The initialization deletes irrecoverable possible data and stored signatures previously, in order to safeguard the secrecy of the data. During the initializing the device requires to the user the inclusion of the one or more sets of biometric data, preferably one or more fingerprints. From each set of biometric data DSP extracts a digital signature that is sent to the microcontroller.

The microcontroller, through a proper algorithm, generates beginning from the digital signature an key of encryption, associated with the digital signature. It is possible associate the same key of encryption to multiple digital signatures. For example more fingerprints by the same owner may be associated with the same key of encryption.

The key of encryption and the associated signatures can be encrypted, through a random and unique key for each device, and stored in a protected area of the flash memory or of the internal eeprom memory. The access to protected of the flash or of the eeprom memory is excluded from outside of the microcontroller, therefore the digital signatures and the keys are inaccessible.

The keys associated with digital signatures are used during the normal use to encrypt / decrypt data of the user.

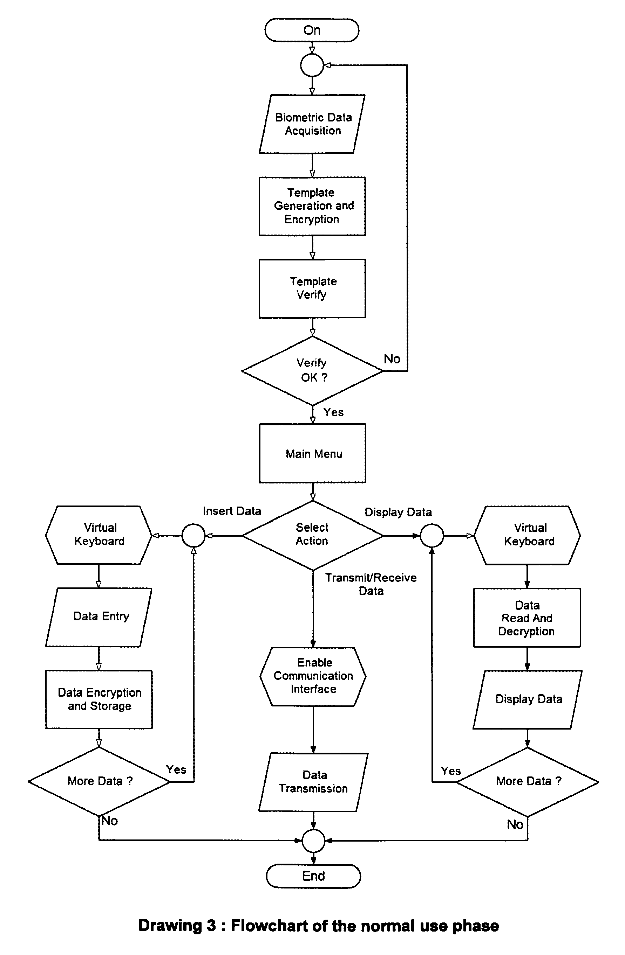

Once that the system was correctly initialized it can be used to enter and read data. At this stage of normal use the flowchart of reference can be found in Drawing 3.

At the starting of the device is required to the user to authenticate, that's to say to provide one of the sets of the biometric data used during the phase of the initialization. The DSP derived from this set of data the digital signature that is sent to the microcontroller. The microcontroller codes the signature and compares it with the encrypted signatures stored in protected memory. If any of the signatures match is granted the permission to proceed and is visualized on the display a operating menu.

Using the menu it's possible to choose whether to insert new data or read existing ones. In both cases, the user can insert data or move between them thanks to the virtual keyboard (112) displayed on the display (110) and to the navigation system composed of biometric sensor (120) and button of selection (180).

The inserted data are encrypted with algorithm recognized secure, preferably of type AES (Advanced Encryption Standard), using the key of encryption associated with the digital signature of the user and then stored in the external no volatile memory (140), of type flash or eeprom . During the reading the data are read from external non-volatile memory, are decrypted and then visualized on the display. To increase the security of the device the display disabled itself after a interval of time of a few seconds.

In the phase of inserting or reading of the data the biometric sensor is used as a pointing system, like a touch-pad, while the button of starting is used as a device of selection. This allows to insert in the easy way any kind of data and at the same time to maintain limited the size of the device.

Another choice of the user, once authenticated, may be that to allow the connection with a personal computer. In this case through a specific software the user can easily manage the data in the easy way. In any case, the use of the computer is only optional, because the device is completely autonomous.

The device is fed through a common button battery or, alternatively, through a rechargeable battery (170). The management of battery is entrusted to a system implemented partially in hardware and partially in the firmware (160), that will disable the components of the device that are not used in a given operating phase and thereby will reduce the consumption and increase the independence. In particular, the system provides to shut down the entire device after a given interval of time of no use.

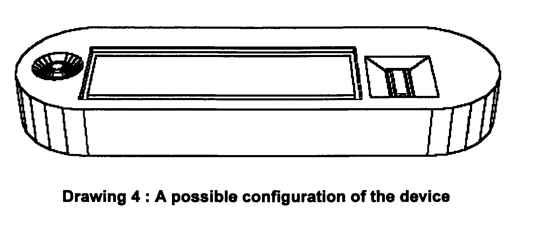

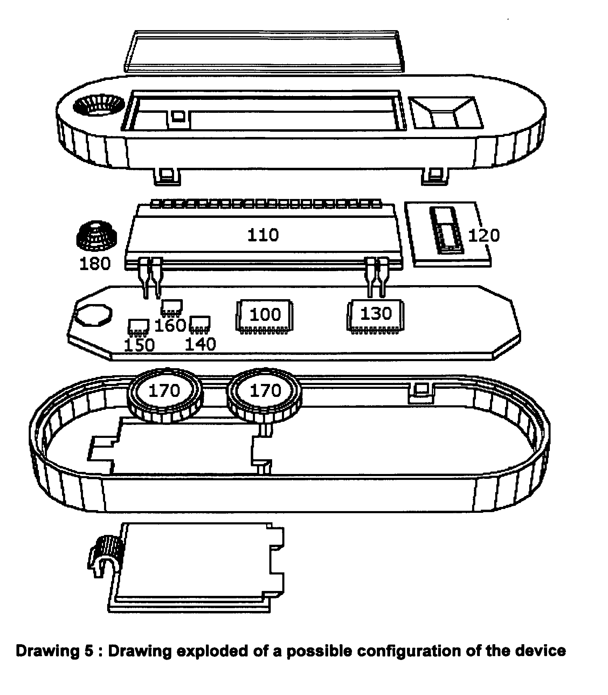

The shut off at time of the device is an additional measure of security, because prevents the access to the confidential data from unauthorized persons if the device remains unattended. The device, in its possible deployment, is fully contained in a plastic container with the size of a keychain. The container (Drawing 4 and Drawing 5) is composed of two parts, one upper and one lower closed together through a series of joints.

In the superior part there is the opening for the display and for the biometric sensor. The display may or may not be protected by a thin slab of plastic. The opening for biometric sensor, in this implementation composed of a sensor for the reading of the fingerprints, also serves as a guide for the finger that must slide on it. Still on the superior part is set the on / off button and the button of selection.

In the lower part of the container is practised a slot for one or two button batteries, or for a rechargeable battery. An appropriate door allows to access to the batteries.

A further opening in the lateral part of the container can contain a possible connector for the USB connection of the device to the personal computer. If the link is kind of wireless, for example Bluetooth, this opening is absent.

### ADVANTAGES: (Illustrafion of the advantages offered by the new invention).

- high degree of miniaturization required to obtain an instrument with a extremely compact size;
- implementation of the system of control of the biometric sensor to be used also as a pointing device;
- minimisation of consumption to prolong the autonomy of the battery;
- implementation of specific *(ad hoc)* security protocols to guarantee the confidentiality of data;

## Claims

1. Claim 1: Portable and autonomous system to storage and to display of the confidential information, such as passwords, PINs, numbers of bank account, etc.. composed of microcontroller, display, non-volatile memory, biometric sensor, integrated device for biometric data processing, battery.

2. System as claimed in claim 1 in which the device integrated of processing of biometric data is a DSP, a microcontroller, an ASIC, or a programmable logic properly programmed.

3. System as claimed in the preceding claims points in which the non-volatile memory is type eeprom or flash.

4. System as claimed in the preceding claims in which the data are stored in ciphered form in the non-volatile memory.

5. System as claimed in the preceding claims in which the input and the reading of the data is done through a virtual keyboard projected on the display and through the biometric sensor used as a pointing device (touchpad).

6. System as claimed in the preceding claims in which the access to the stored data is granted only after that the user has been authenticated by a biometric sensor.

7. System as claimed in the preceding claims in which the system requires to the user to authenticate himself at the first starting of the device, or after a reset of the same, to store signatures associated with himself biometric data and to create encryption keys of the data.

8. System as claimed in the preceding claims in which is previewed a system of bypass of the biometric sensor for the recovery of the data, in the case is not possible to use the biometric sensor.

9. System as claimed in the preceding claims in which is inserted a circuit for recharge the battery

10. System as claimed in the preceding claims in which is inserted a interface of communication, of seriale type, usb, bluetooth, zig-bee, wifi, infrared or intranet, for the connection to a personal computer.
